# EUROPEAN PATENT APPLICATION

(11) **EP 4 357 982 A1**
(43) Date of publication of application: **24.04.2024**
(21) Application number: 22825333.2
(22) Date of filing: 15.06.2022
(51) Int. Cl.: G06N 3/08, G06N 3/04, G06N 3/063, G06N 5/02, G06F 16/901

(54) **METHOD AND SYSTEM FOR GENERATING INTERMEDIATE REPRESENTATIONS**

(30) Priority: 16.06.2021 KR 20210077963
(71) Applicant: Moreh Corp., Seoul 06160 (KR); Seoul National University R&DB Foundation, Seoul 08826 (KR)
(72) Inventor: LEE, Jaejin, Seoul 06610 (KR); PARK, Jungho, Seoul 08725 (KR); JO, Gangwon, Seoul 08791 (KR); KIM, Heehoon, Daejeon 35207 (KR); KIM, Jinpyo, Seoul 06276 (KR)
(74) Representative: Studio Torta S.p.A.
(86) International application number: PCT/KR2022/008505
(87) International publication number: WO 2022/265410

(57) **Abstract**

A method for creating an intermediate representation is performed by one or more processors and includes by an intermediate representation creation part, extracting, from the program, information on data for input and output and information on operation, by the intermediate representation creation part, determining the presence or absence of an in-place operation based on the extracted information on data and the extracted information on operation, and by the intermediate representation creation part, if there is the in-place operation, creating an intermediate representation using the extracted information on data, the extracted information on operation, and a creation rule associated with the in-place operation, in which input data of the in-place operation is data that is replaced with output data after the in-place operation.

## Description

### TECHNICAL FIELD

The disclosure relates to a method and system for creating an intermediate representation, and more specifically, to a method and system for creating an intermediate representation from a program including an in-place operation.

### BACKGROUND

A program may include data and instructions for performing operations on the data.

The simplest way to execute the program is to execute given instructions in sequence, but in this case, applicable optimization techniques are limited because executing the program considering future operations is not possible.

To solve this problem, instead of executing given instructions in sequence, an intermediate representation with the same meaning as the program can be constructed, and optimization techniques can be applied on the intermediate representation to transform and execute the same.

Some of the operations included in the program may include in-place operations. When the in-place operation is represented in the intermediate representation graph, an iterative structure may be generated, and the generation of the iterative structure may lead into complicated algorithm and a problem that it is difficult to apply optimization.

### SUMMARY

In order to solve one or more problems (e.g., the problems described above and/or other problems not explicitly described herein), the present disclosure provides a method for, a non-transitory computer-readable recording medium storing instructions for, and an apparatus (system) for creating an intermediate representation.

The present disclosure may be implemented in various ways, including a method, an apparatus (system), or a non-transitory readable storage medium storing instructions.

A method for creating an intermediate representation from a program including an in-place operation may be performed by one or more processors and may include extracting, from the program, information on data for input and output and information on operation, determining the presence or absence of an in-place operation based on the extracted information on data and the extracted information on operation, and if there is the in-place operation, creating an intermediate representation using the extracted information on data, the extracted information on operation, and a creation rule associated with the in-place operation, in which input data of the in-place operation may be data that may be replaced with output data after the in-place operation.

The method may further include storing, in a database, the extracted data for input and output, and a corresponding relationship between data included in the intermediate representation.

The creating the intermediate representation may include creating the intermediate representation by creating output data of the operation of the intermediate representation corresponding to output data of the in-place operation, and a data name of the output data of the operation of the intermediate representation may be different from a data name of the input data of the in-place operation.

The storing, in the database, may include updating the database by changing such that a pointer of the input data of the in-place operation points to the output data of the operation of the intermediate representation corresponding to the output data of the in-place operation.

The in-place operation may include a first in-place operation and a second in-place operation following the first in-place operation, the creating the intermediate representation may include creating the intermediate representation by creating the output data of the operation of the intermediate representation corresponding to the output data of the first in-place operation and the output data of the second in-place operation, and a data name of the input data of the first in-place operation, a data name of the output data of the first in-place operation, and a data name of the output data of the second in-place operation may be different from one another.

The storing, in the database, may include updating the database by changing such that a pointer of the input data of the first in-place operation points to the output data of the operation of the intermediate representation corresponding to the output data of the second in-place operation.

The storing, in the database, may include, if a first size of the input data of the in-place operation is different from a second size of the output data of the in-place operation, updating the database by changing such that a pointer of the input data of the in-place operation points to output data of the operation of the intermediate representation corresponding to the output data of the in-place operation, and storing information on an operation to return to the first size, in association with the input data of the in-place operation.

The creating the intermediate representation may include, as a subsequent operation of the in-place operation, if there is an operation using the first size of the input data of the in-place operation, creating the intermediate representation using the operation to return the second size of the input data of the in-place operation to the first size.

The storing, in the database, may include, if the subsequent operation of the in-place operation is a subsequent in-place operation, changing the second size of the output data of the in-place operation to the first size by pointing each pointer of the input data of the in-place operation and the output data of the in-place operation to the output data of the operation of the intermediate representation corresponding to the output data of the subsequent in-place operation, and storing information to return to the second size, in association with the output data of the in-place operation.

A non-transitory computer-readable recording medium storing instructions for executing a method for creating an intermediate representation from a program including an in-place operation on a computer is provided.

A system for creating an intermediate representation may include a memory, and one or more processors connected to the memory and configured to execute one or more computer-readable programs included in the memory, in which the one or more programs may include instructions for extracting, from the program, information on data for input and output and information on operation, determining the presence or absence of an in-place operation based on the extracted information on data and the extracted information on operation, and if there is an in-place operation, creating an intermediate representation using the extracted information on data, the extracted information on operation, and a creation rule associated with the in-place operation, in which the in-place input data may be data that is replaced with output data after the in-place operation.

According to some examples of the present disclosure, by creating an intermediate representation from a program including an in-place operation, it is possible to prevent the operation order from being unknown due to an iterative structure occurring in the intermediate representation. In addition, by preventing the iterative structure, program optimization techniques can be easily applied, thereby reducing the memory usage of the program and increasing the speed of program execution.

The effects of the present disclosure are not limited to the effects described above, and other effects not described herein can be clearly understood by those of ordinary skill in the art (referred to as "ordinary technician") from the description of the claims.

### BRIEF DESCRIPTION OF THE DRAWINGS

The above and other objects, features and advantages of the present disclosure will be described with reference to the accompanying drawings described below, where similar reference numerals indicate similar elements, but not limited thereto, in which:
FIG. 1 is a diagram illustrating an example of a method for creating an intermediate representation by an information processing system;
FIG. 2 is a block diagram illustrating an internal configuration of the information processing system;
FIG. 3 is a block diagram of an internal configuration of a processor;
FIG. 4 is a flowchart illustrating an example of a method for creating an intermediate representation;
FIG. 5 is a diagram illustrating an example of a database storing created intermediate representations and data;
FIG. 6 is a diagram illustrating an example of an intermediate representation created from a program;
FIG. 7 is a diagram illustrating an example of a process of creating an intermediate representation from a program and storing, in a database, corresponding relationship between the program and the intermediate representation;
FIG. 8 is a diagram illustrating an example of a state in which an intermediate representation from a program including an in-place operation that changes the size of data is created and the corresponding relationship between the program and the intermediate representation is stored in the database; and
FIG. 9 is a diagram illustrating an example of a state in which an intermediate representation is created from a program including an in-place operation that changes the size of two or more data, and corresponding relationship between the program and the intermediate representation is stored in the database.

### DETAILED DESCRIPTION

Hereinafter, example details for the practice of the present disclosure will be described in detail with reference to the accompanying drawings. However, in the following description, detailed descriptions of well-known functions or configurations will be omitted if it may make the subject matter of the present disclosure rather unclear.

In the accompanying drawings, the same or corresponding components are assigned the same reference numerals. In addition, in the following description of various examples, duplicate descriptions of the same or corresponding components may be omitted. However, even if descriptions of components are omitted, it is not intended that such components are not included in any example.

Advantages and features of the disclosed examples and methods of accomplishing the same will be apparent by referring to examples described below in connection with the accompanying drawings. However, the present disclosure is not limited to the examples disclosed below, and may be implemented in various forms different from each other, and the examples are merely provided to make the present disclosure complete, and to fully disclose the scope of the disclosure to those skilled in the art to which the present disclosure pertains.

The terms used herein will be briefly described prior to describing the disclosed example(s) in detail. The terms used herein have been selected as general terms which are widely used at present in consideration of the functions of the present disclosure, and this may be altered according to the intent of an operator skilled in the art, related practice, or introduction of new technology. In addition, in specific cases, certain terms may be arbitrarily selected by the applicant, and the meaning of the terms will be described in detail in a corresponding description of the example(s). Therefore, the terms used in the present disclosure should be defined based on the meaning of the terms and the overall content of the present disclosure rather than a simple name of each of the terms.

As used herein, the singular forms "a," "an," and "the" are intended to include the plural forms as well, unless the context clearly indicates the singular forms. Further, the plural forms are intended to include the singular forms as well, unless the context clearly indicates the plural forms. Further, throughout the description, when a portion is stated as "comprising (including)" a component, it is intended as meaning that the portion may additionally comprise (or include or have) another component, rather than excluding the same, unless specified to the contrary.

Further, the term "module" or "part" used herein refers to a software or hardware component, and "module" or "part" performs certain roles. However, the meaning of the "module" or "part" is not limited to software or hardware. The "module" or "part" may be configured to be in an addressable storage medium or configured to play one or more processors. Accordingly, as an example, the "module" or "part" may include components such as software components, object-oriented software components, class components, and task components, and at least one of processes, functions, attributes, procedures, subroutines, program code segments, drivers, firmware, micro-codes, circuits, data, database, data structures, tables, arrays, and variables. Furthermore, functions provided in the components and the "modules" or "parts" may be combined into a smaller number of components and "modules" or "parts", or further divided into additional components and "modules" or "parts."

The "module" or "part" may be implemented as a processor and a memory. The "processor" should be interpreted broadly to encompass a general-purpose processor, a Central Processing Unit (CPU), a microprocessor, a Digital Signal Processor (DSP), a controller, a microcontroller, a state machine, and so forth. Under some circumstances, the "processor" may refer to an application-specific integrated circuit (ASIC), a programmable logic device (PLD), a field-programmable gate array (FPGA), and so on. The "processor" may refer to a combination for processing devices, e.g., a combination of a DSP and a microprocessor, a combination of a plurality of microprocessors, a combination of one or more microprocessors in conjunction with a DSP core, or any other combination of such configurations. In addition, the "memory" should be interpreted broadly to encompass any electronic component that is capable of storing electronic information. The "memory" may refer to various types of processor-readable media such as random access memory (RAM), read-only memory (ROM), non-volatile random access memory (NVRAM), programmable read-only memory (PROM), erasable programmable read-only memory (EPROM), electrically erasable PROM (EEPROM), flash memory, magnetic or optical data storage, registers, and so on. The memory is said to be in electronic communication with a processor if the processor can read information from and/or write information to the memory. The memory integrated with the processor is in electronic communication with the processor.

In the present disclosure, a "system" may refer to at least one of a server apparatus and a cloud apparatus, but is not limited thereto. For example, the system may include one or more server apparatus. In another example, the system may include one or more cloud apparatus. In still another example, the system may include both the server apparatus and the cloud apparatus operated in conjunction with each other.

In the present disclosure, "each of a plurality of A" may refer to each of all components included in the plurality of A, or may refer to each of some of the components included in a plurality of A.

In the present disclosure, "intermediate representation" may refer to a graph and/or information associated therewith that has the same meaning as the program and is generated to efficiently execute the program. The intermediate representation may include one or more nodes and one or more edges.

In the present disclosure, "in-place operation" may refer to an operation of the program operations, in which output data is the same as input data. In other words, it may refer to an operation in which a value stored in the memory allocated to the input data is replaced with a value of the output data after the operation.

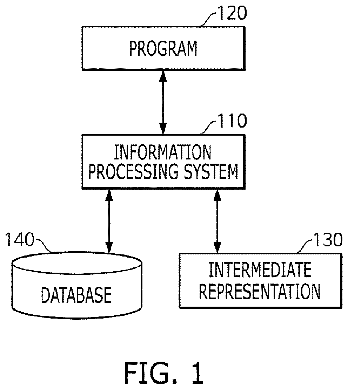

FIG. 1 is a diagram illustrating an example of a method for creating an intermediate representation 130 by an information processing system 110. The information processing system 110 may extract information from a program 120 and determine the presence or absence of an in-place operation in the program 120. In addition, if the in-place operation is present in the program 120, the information processing system 110 may create the intermediate representation 130 for the program 120 using a creation rule, and store, in a database 140, the data of the program and corresponding relationship between the program and the intermediate representation.

The information processing system 110 may extract, from the program 120, information on data for input and output and information on operation. For example, the information processing system 110 may extract, from the program 120, the information on data, such as creation of new variable or constant, definition and change of variable or constant value, data type of variable or constant, size of variable or constant, etc. In addition, the information processing system 110 may extract the information on operation, such as the type of operation being performed, information on input and output data of the operation, parameters of the operation, etc. The program 120 may include a deep learning program, and the data may include tensor type data. The information processing system 110 may extract information on the data type, size of each dimension, etc. from the tensor type data included in the deep learning program.

The information processing system 110 may determine the presence or absence of an in-place operation based on the extracted information on data and the extracted information on operation. The in-place operation may refer to an operation in which a value stored in the memory allocated to the input data is replaced with a value of the output data after the operation. If the in-place operation is present in the program 120, the information processing system 110 may create (and update) the intermediate representation 130 using the extracted information on data, the extracted information on operation, and a creation rule associated with the in-place operation. The intermediate representation 130 may be represented in the form of a graph including nodes and edges. In the intermediate representation 130 represented in the form of a graph, data and operations extracted from the program 120 may be represented as nodes, and the input and output relationship between the data and operations may be represented as edges. The creation rule associated with the in-place operation may refer to a creation rule for creating and updating a new output data node so that the in-place operation is the same as a general operation rather than in-place operation.

The information processing system 110 may store, in the database 140, the data for input and output extracted from the program 120 and the corresponding relationship between the data included in the program and the intermediate representation. The data for input and output may refer to variables or tensors of the program. In addition, the corresponding relationship between the data of the program and the data included in the intermediate representation may refer to a pointer, which means address information of one input and output data to other input and output data, and/or an inverse operation for the in-place operation that changes the size of the input and output data.

Additionally, if the in-place operation is present in the program and the intermediate representation is created (and updated), the data for input and output, and the corresponding relationship between the data of the program and the data included in the intermediate representation may be stored and updated in the database 140.

With this configuration, if the in-place operation is included in the program, it is possible to prevent the order of operations from being unknown due to the iterative structure generated while the intermediate representation is created. In addition, since there is no iterative structure, program optimization techniques may be easily applied, thereby reducing the memory usage of the program and maintaining the fast program execution speed.

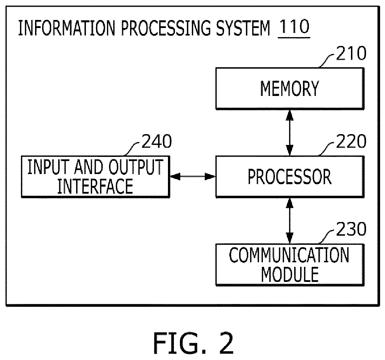

FIG. 2 is a block diagram illustrating an internal configuration of the information processing system 110. The information processing system 110 may include a memory 210, a processor 220, a communication module 230, and an input and output interface 240. As illustrated in FIG. 2, the information processing system 110 may be configured to communicate information and/or data through a network by using the communication module 230.

The memory 210 may include any non-transitory computer-readable recording medium. The memory 210 may include a permanent mass storage device such as random access memory (RAM), read only memory (ROM), disk drive, solid state drive (SSD), flash memory, etc. In another example, a non-destructive mass storage device such as ROM, SSD, flash memory, disk drive, etc. may be included in the information processing system 110 as a separate permanent storage device that is distinct from the memory. In addition, the memory 210 may store an operating system and at least one program code (e.g., a code installed and driven in the information processing system 110, for determining the presence of an in-place operation, creating and updating an intermediate representation, etc.).

These software components may be loaded from a computer-readable recording medium separate from the memory 210. Such a separate computer-readable recording medium may include a recording medium directly connectable to the information processing system 110, and may include a computer-readable recording medium such as a floppy drive, a disk, a tape, a DVD/CD-ROM drive, a memory card, etc., for example. In another example, the software components may be loaded into the memory 210 through the communication module 230 rather than the computer-readable recording medium. For example, at least one program may be loaded into the memory 210 based on a computer program (e.g., a program for determining the presence or absence of an in-place operation, creating and updating an intermediate representation, etc.) installed by files provided through the communication module 230 by a developer or a file distribution system that distributes application installation files.

The processor 220 may be configured to process the instructions of the computer program by performing basic arithmetic, logic, and input and output operations. The commands may be provided to a user terminal (not illustrated) or another external system by the memory 210 or the communication module 230. For example, the processor 220 may extract, from the program, information on data for input and output and information on operation, determine the presence or absence of an in-place operation based on the extracted information on data and the extracted information on operation, and if there is an in-place operation, create an intermediate representation using the extracted information on data, the extracted information on operation, and a creation rule associated with the in-place operation.

The communication module 230 may provide a configuration or function for the user terminal (not illustrated) and the information processing system 110 to communicate with each other through a network, and may provide a configuration or function for the information processing system 110 to communicate with an external system (e.g., a separate cloud system). For example, control signals, commands, data, and the like provided under the control of the processor 220 of the information processing system 110 may be transmitted to the user terminal and/or the external system through the communication module 230 and the network through the communication module of the user terminal and/or an external system. For example, an intermediate representation representing the program created by a computing device may be transmitted to an external system (e.g., a system executing the program, etc.).

In addition, the input and output interface 240 of the information processing system 110 may be a means for interfacing with an apparatus (not illustrated) for inputting or outputting, which may be connected to the information processing system 110 or included in the information processing system 110. In FIG. 2, the input and output interface 240 is illustrated as a component configured separately from the processor 220, but aspects are not limited thereto, and the input and output interface 240 may be configured to be included in the processor 220. The information processing system 110 may include more components than those illustrated in FIG. 2. Meanwhile, most of the related components may not necessarily require exact illustration.

The processor 220 of the information processing system 110 may be configured to manage, process, and/or store the information and/or data received from a plurality of user terminals and/or a plurality of external systems. The processor 220 may receive, from a user terminal and/or an external system, a program code including the information on data for input and output of the program and the information on operation. In this case, the processor may extract the information on data for input and output and the information on operation included in the received code, determine the presence or absence of an in-place operation based on the extracted information on data and the extracted information on operation, and if there is an in-place operation, create an intermediate representation using the extracted information on data, the extracted information on operation, and a creation rule associated with the in-place operation.

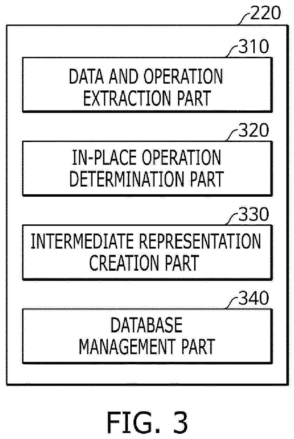

FIG. 3 is a block diagram illustrating an internal configuration of the processor 220. As illustrated, the processor 220 may include a data and operation extraction part 310, an in-place operation determination part 320, an intermediate representation creation part 330, and a database management part 340. While only one processor is illustrated in FIG. 3, aspects are not limited thereto, and there may be a plurality of processors.

The data and operation extraction part 310 may extract, from the program, the information on data for input and output and the information on operation. For example, the data and operation extraction part 310 may extract the information on data, such as creation of new variable or constant, definition and change of variable or constant value, data type of variable or constant, size of variable or constant from the program, etc. In addition, the data and operation extraction part 310 may extract the information on operation, such as the type of the operation being performed, information on input and output data of the operation, parameters of the operation, etc. The program may include a deep learning program, and the data may include tensor type data. The data and operation extraction part 310 may extract information on the data type, size of each dimension, etc. from the tensor type data included in the deep learning program.

The in-place operation determination part 320 may determine the presence or absence of an in-place operation based on the information on input and output data and the information on operation. The in-place operation may refer to an operation in which a value stored in the memory allocated to the input data is replaced with a value of the output data after the operation. For example, in the case of PyTorch, which is a deep learning framework, the in-place operation may include an in-place operation (e.g., add_, mul_, etc.) that does not change the shape (or size) of the tensor, and an in-place operation (e.g., view, etc.) that changes the shape (or size) of the tensor, although aspects are not limited thereto.

If there is an in-place operation, the intermediate representation creation part 330 may create and update an intermediate representation using the extracted information on data, the extracted information on operation, and a creation rule associated with the in-place operation. The intermediate representation may be represented in the form of a graph including nodes representing data and operations and edges representing the input and output relationship between the data and the operations. The creation rule associated with the in-place operation may refer to a creation rule for creating and updating a new output data node so that the in-place operation is the same as a general operation rather than in-place operation.

The intermediate representation creation part 330 may create an intermediate representation by creating output data of the operation of the intermediate representation corresponding to the output data of the in-place operation. In this case, data name of the output data of the operation of the intermediate representation may be different from that of the input data of the in-place operation. For example, if the in-place operation has the form "A = A + B", the intermediate representation creation part 330 may create an intermediate representation with, for output data "A", output data "A2" with a different data name from the input data "A".

If the extracted in-place operation includes a first in-place operation and a second in-place operation following the first in-place operation, the intermediate representation creation part 330 may create the intermediate representation by creating output data of the operation of the intermediate representation corresponding to the output data of the first in-place operation and the output data of the second in-place operation. In this case, the data name of the input data of the first in-place operation, the data name of the output data of the first in-place operation, and the data name of the output data of the second in-place operation may be different from one another. For example, if the first in-place operation (e.g., "C = A.add_(B)") and the second in-place operation (e.g., "D = C.add_(B)") following the first in-place operation are extracted from the program, the intermediate representation creation part 330 may create an intermediate representation by creating output data "C" and "D" of the operation of the intermediate representation corresponding to "C" which is the output data of the first in-place operation and "D" which is the output data of the second in-place operation, respectively.

As a subsequent operation of the in-place operation in which the first size of the input data of the in-place operation is different from the second size of the output data of the in-place operation, if there is an operation that uses the first size of the input data of the in-place operation, the intermediate representation creation part 330 may create an intermediate representation using an operation (i.e., inverse operation) that can return the second size of the input data of the in-place operation to the first size. For example, as a subsequent operation of an in-place operation (e.g., "D = A.view(3,2)") in which the first size of input data "A" (e.g., 2X3) and the second size of output data "D" (e.g., 3 X 2) are different from each other, if there is an operation that uses the first size of the input data of the in-place operation (e.g., "F = A.add_(B)", where the input data "B" is the first size (2 X 3)), the intermediate representation creation part 330 may create an intermediate representation using an inverse operation.

The database management part 340 may store, in the database, the extracted information on data and the corresponding relationship between the data included in the intermediate representation. The extracted information on data may include the name of the data (e.g., variable name or tensor name) or information on the data type and size of the data. In addition, the corresponding relationship between the data included in the program and the intermediate representation may include information on the pointer included in the data. In addition, information on the previous size of the input and output data may be included in order to perform an inverse operation on the in-place operation that changes the size of the input and output data.

The database management part 340 may update the database by changing such that the pointer of the input data of the in-place operation points to the output data of the operation of the intermediate representation corresponding to the output data of the in-place operation. For example, if the in-place operation is in the form "A = A + B", according to the result of executing the in-place operation, the database management part 340 may update the database by changing the pointer pointing to input data "A" of the operation of the intermediate representation so that the pointer now points to output data "A2" of the operation of the intermediate representation.

If the extracted in-place operation includes a first in-place operation and a second in-place operation following the first in-place operation, the database management part 340 may update the database by changing the pointer of the input data of the first in-place operation so that the pointer points to the output data of the operation of the intermediate representation corresponding to the output data of the second in-place operation. For example, if the extracted in-place operation includes the first in-place operation (e.g., "C = A.add_(B)") and the second in-place operation (e.g., "D = C.add_(B)") following the first in-place operation, according to the result of executing the second in-place operation, the database management part 340 may update the database by changing the pointer of the input data "A" of the first in-place operation so that the pointer points to the output data "D" of the operation of the intermediate representation.

If a first size of the input data of the in-place operation is different from a second size of the output data of the in-place operation, the database management part 340 may update the database by changing the pointer of the input data of the in-place operation so that the pointer points to the output data of the operation of the intermediate representation corresponding to the output data of the in-place operation. In this case, the database management part 340 may store information on an operation (i.e., inverse operation) to return to the first size, in association with the input data of the in-place operation. For example, if the first size of input data "A" (e.g., 2 X 3) and the second size of output data "D" (e.g., 3X2) are different from each other, according to the result of executing the second in-place operation, the database management part 340 may update the database by changing the pointer of the input data "A" of the first in-place operation so that the pointer points to the output data "D" of the operation of the intermediate representation. In this case, the database management part 340 may store, in the database, information on an operation to return to the first size (e.g., 2 X 3) in association with the input data "A" of the in-place operation.

As a subsequent operation of the in-place operation in which the first size of the input data of the in-place operation is different from the second size of the output data of the in-place operation, if there is an operation that uses the first size of the input data of the in-place operation, the database management part 340 may update the database by pointing each pointer of the input data and output data of the in-place operation to the output data of the operation of the intermediate representation corresponding to the output data of subsequent in-place operations and changing the second size of the output data of the in-place operation to the first size. In this case, the database management part 340 may store information to return to the second size, in association with the output data of the in-place operation. For example, as a subsequent operation of an in-place operation (e.g., "D = A.view(3,2)") in which the first size of input data "A" (e.g., 2X3) and the second size of output data "D" (e.g., 3X2) are different from each other, if there is an operation that uses the first size of the input data of the in-place operation (e.g., "F = A.add_(B)", where the input data "B" is the first size (2 X 3)), the database management part 340 may update the database by changing each pointer of the input data "A" of the in-place operation and the output data "D" of the in-place operation so that the pointers point to the output data of the operation of the intermediate representation corresponding to the output data "F" of the subsequent in-place operation. In this case, the database management part 340 may store information to return to the second size (e.g., view(2,3)), in association with the output data of the in-place operation.

The internal configuration of the processor 220 illustrated in FIG. 3 is only an example, and in some examples, configurations other than the illustrated internal configuration may be additionally included, or some configurations may be omitted, or some processes may be performed by other configurations or external systems. In addition, although the internal components of the processor 220 are described separately for each function in FIG. 3, it does not necessarily mean that they are physically separated.

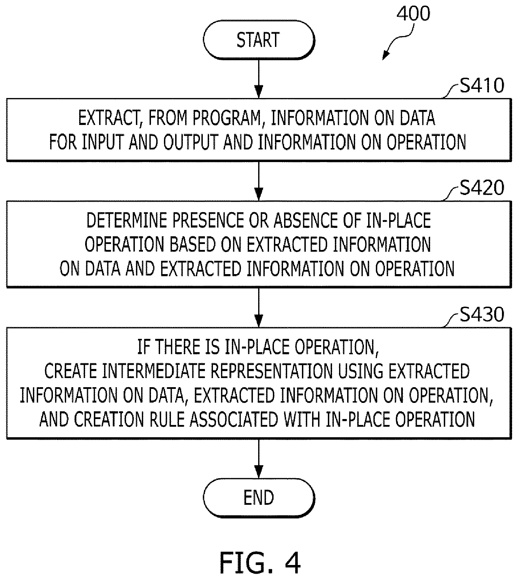

FIG. 4 is a flowchart illustrating an example of a method 400 for creating an intermediate representation. Each operation of the method 400 may be performed by one or more processors. The method 400 may be initiated by the processor extracting, from a program, information on data for input and output and information on operation, at S410. The program may include a deep learning program, and the data of the program may include tensor type data.

The processor may determine the presence or absence of an in-place operation based on the extracted information on data and the extracted information on operation, at S420. The in-place operation may refer to an operation in which a value stored in the memory allocated to the input data is replaced with a value of the output data after the operation. For example, in the case of PyTorch, which is a deep learning framework, the in-place operation may include an in-place operation (e.g., add_, mul_, etc.) that does not change the shape (or size) of the tensor, and an in-place operation (e.g., view, etc.) that changes the shape (or size) of the tensor, although aspects are not limited thereto.

If there is the in-place operation, the processor may create an intermediate representation using the extracted information on data, the extracted information on operation, and a creation rule associated with the in-place operation, at S430. Additionally, the processor may store, in a database, the extracted data for input and output and the corresponding relationship between the data included in the intermediate representation.

The processor may create an intermediate representation by creating output data of the operation of the intermediate representation corresponding to output data of the in-place operation. In this case, data name of the output data of the operation of the intermediate representation may be different from that of the input data of the in-place operation. Additionally, the processor may update the database by changing such that the pointer of the input data of the in-place operation points to the output data of the operation of the intermediate representation corresponding to the output data of the in-place operation.

If the in-place operation includes a first in-place operation and a second in-place operation following the first in-place operation, the processor may create the intermediate representation by creating output data of the operation of the intermediate representation corresponding to the output data of the first in-place operation and the output data of the second in-place operation. In this case, the data name of the input data of the first in-place operation, the data name of the output data of the first in-place operation, and the data name of the output data of the second in-place operation may be different from one another. Additionally, the processor may update the database by changing such that the pointer of the input data of the first in-place operation points to the output data of the operation of the intermediate representation corresponding to the output data of the second in-place operation.

If the first size of the input data of the in-place operation is different from the second size of the output data of the in-place operation, the processor may update the database by changing such that the pointer of the input data of the in-place operation points to the output data of the operation of the intermediate representation. In this case, the processor may store, in the database, information on operation to return to the first size, in association with the input data of the in-place operation.

As a subsequent operation of the in-place operation in which the first size of the input data of the in-place operation is different from the second size of the output data of the in-place operation, if there is an operation that uses the first size of the input data of the in-place operation, the processor may create an intermediate representation using an operation to return the second size of the input data of the in-place operation to the first size. Additionally, if the subsequent operation of the in-place operation is a subsequent in-place operation, the processor may change the second size of output data of the in-place operation to the first size by pointing each pointer of the input data of the in-place operation and the output data of the in-place operation to the output data of the operation of the intermediate representation corresponding to the output data of the subsequent in-place operation. In this case, the processor may store information to return to the second size, in association with the output data of the in-place operation.

The flowchart illustrated in FIG. 4 and the above description are merely examples, and may be implemented differently in some other examples. For example, one or more operations may be omitted or implemented by a different configuration, the order of operations may be changed, one or more operations may be performed simultaneously or in parallel, or one or more operations may be performed repeatedly multiple times.

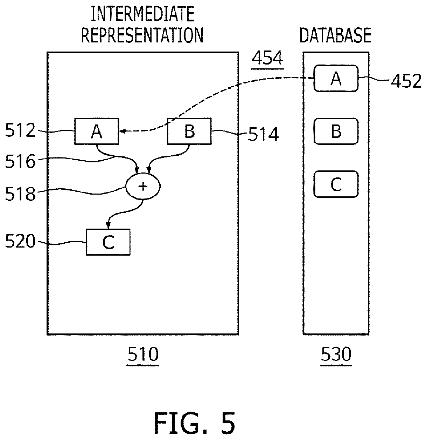

FIG. 5 is a diagram illustrating an example of a database 530 storing created intermediate representations 510 and data. The processor may extract, from the program, information on data for input and output, and information on operation, and create the intermediate representation 510 using the extracted information on data, the extracted information on operation, and a creation rule associated with the in-place operation. For example, as illustrated, if the general operation "C = A + B" is present in the program, the processor may create the intermediate representation 510 including input data node "A" 512, input data node "B" 514, output data node "C" 520 and operator node "+" 518, based on the input data "A" and "B" and the output data "C" of the program. In addition, the intermediate representation 510 may represent the relationship between the input and output data nodes 512, 514, and 520 and the operator node 518 using an edge (e.g., an edge 516 between the input data "A" and the operator node "+").

The processor may store, in the database 530, the extracted data for input and output, and the corresponding relationship between the data included in the intermediate representation. The corresponding relationship between the data included in the intermediate representation may herein represent a corresponding relationship between the data of the program and the data nodes included in the intermediate representation (e.g., corresponding relationship 454 of data "A"). In addition, the information 454 on the corresponding relationship between the input data of the program and the input data nodes included in the intermediate representation may be stored in the database.

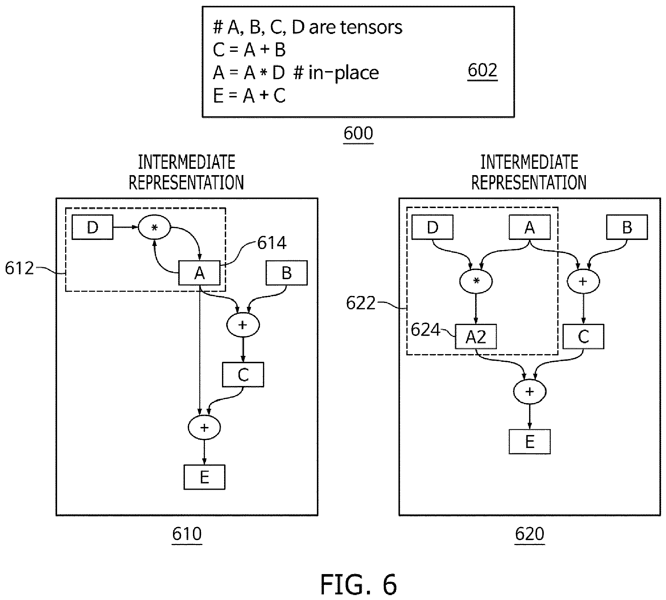

FIG. 6 is a diagram illustrating an example of an intermediate representation created from a program 600. Some of the operations included in the program may include in-place operations. If in-place operations are represented in the intermediate representation graph, an iterative structure may occur. If the iterative structure occurs, the algorithm may become complicated, and there is a problem that it is difficult to apply optimization. FIG. 6 illustrates an example of a first state 610 in which the iterative structure occurs, and a second state 620 in which the iterative structure is removed by a creation rule associated with the in-place operation, for the intermediate representation created for the program 600 including an in-place operation 602.

The first state 610 represents an example of an intermediate representation in which an iterative structure 612 occurs, when the program 600 includes the in-place operation 602 such as "A = A * D". That is, data node "A" 614 and data node "D" are input to the operator as input data, and input back to the data node "A" 614 such that the iterative structure occurs between the data node "A" 614 and the operator.

The second state 620 represents an example of an intermediate representation created according to a creation rule associated with the in-place operation. For example, the processor may create an intermediate representation 622 for the in-place operation by creating output data 624 of the operation of the intermediate representation corresponding to the output data of the in-place operation. That is, as illustrated, the processor may create output data "A2" 624 of the operation of the intermediate representation corresponding to the output data "A" of the in-place operation 602 included in the program 600. In this case, the data name (e.g., "A2") of the output data in the intermediate representation may be created to be different from the data name (e.g., "A") of the input data of the in-place operation in the program 600. According to this method, the data value of input data "A" is input to the input data node "A" of the operation of the intermediate representation, and the data value of the output data "A" is input to the output data node "A2" 624 of the operation of the intermediate representation, so that the iterative structure does not occur, thereby preventing confusion in the order of operations.

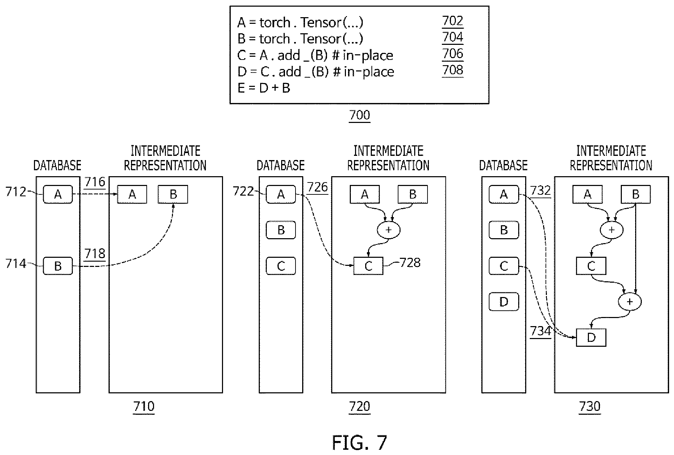

FIG. 7 is a diagram illustrating an example of a process of creating an intermediate representation from a program 700 and storing, in a database, the corresponding relationship between the program 700 and the intermediate representation. The information processing system may create an intermediate representation using data extracted from the program 700 including an in-place operation and a creation rule associated with the in-place operation, and store, in the database, the corresponding relationship between the extracted data and the intermediate representation.

As a specific example, an intermediate representation for the program 700 may be created through first to third states 710, 720, and 730. The first state 710 represents an example of a state in which an intermediate representation of the program 700 is created based on operations 702 and 704 that create data included in the program 700, and the corresponding relationship between the program 700 and the intermediate representation is stored in the database. For example, as illustrated, the information processing system may extract information on newly created tensor A and tensor B from the first operation 702 (e.g., "A = torch. Tensor") and the second operation 704 (e.g., "B = torch. Tensor") of the program 700. As illustrated, data nodes (e.g., "A" and "B") corresponding to tensor A and tensor B may be added to the intermediate representation, and information 712 and 714 on tensor A and tensor B of the program 700, and information 716 and 718 that tensor A and tensor B correspond to data node A and data node B of the intermediate representation, respectively, may be stored in the database.

The second state 720 represents an example of a state in which an intermediate representation of the program 700 is created based on a third operation 706, which is the first in-place operation included in the program 700, and the corresponding relationship between the program 700 and the intermediate representation is updated in the database. For example, as illustrated, the information processing system may create an intermediate representation by creating output data (e.g., data node C 728) of the operation of the intermediate representation corresponding to output data (e.g., tensor C) of the third operation 706 (e.g., "C = A.add_(B)") which is the first in-place operation extracted from the program 700. The information processing system may change such that the pointer of input data (e.g., tensor A) of the third operation 706 which is the first in-place operation points to the output data (e.g., the data node C 728) of the operation of the intermediate representation corresponding to the output data (e.g., tensor C) of the first in-place operation. That is, the information processing system may update the corresponding relationship stored in the database with information 726 that the tensor A of the program 700 corresponds to the data node C of the intermediate representation. In the illustration of the second state 720, the information that tensor B and tensor C correspond to data node B and data node C of the intermediate representation, respectively, is omitted, but this is merely for convenience of explanation, and information on each tensor in the database may include information that the tensor corresponds to a specific data node of the intermediate representation.

The third state 730 represents an example of a state in which an intermediate representation of the program 700 is created based on a fourth operation 708 which is the second in-place operation included in the program 700, and the corresponding relationship between the program 700 and the intermediate representation is updated in the database. For example, as illustrated, the information processing system may create an intermediate representation by creating output data (e.g., data node D 734) of the operation of the intermediate representation corresponding to output data (e.g., tensor D) of the fourth operation 708 (e.g., "D = C.add_(B)") which is the second in-place operation extracted from the program 700. The information processing system may change such that the pointer of input data (e.g., tensor A) of the third operation 706 which is the first in-place operation points to the output data (e.g., the data node D) of the operation of the intermediate representation corresponding to the output data (e.g., tensor D) of the second in-place operation. In addition, the information processing system may change such that the pointer of input data (e.g., tensor C) of the fourth operation 708 which is the second in-place operation points to the output data (e.g., the data node D) of the operation of the intermediate representation corresponding to the output data (e.g., tensor D) of the second in-place operation. That is, the information processing system may update the corresponding relationship stored in the database with information 732 and 734 that tensor A and tensor C of the program 700 correspond to data node D of the intermediate representation. In the illustration of the third state 730, the information that tensor B and tensor D correspond to data node B and data node D of the intermediate representation, respectively, is omitted, but this is merely for convenience of explanation, and information on each tensor in the database may include information that the tensor corresponds to a specific data node of the intermediate representation.

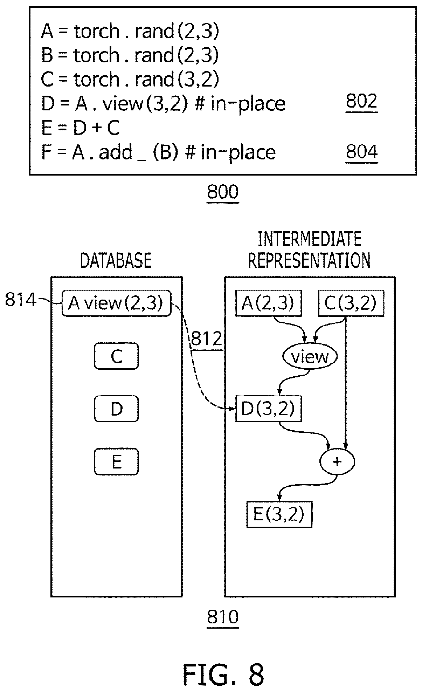

FIG. 8 is a diagram illustrating an example of a state in which an intermediate representation from a program 800 including an in-place operation that changes the size of data is created and the corresponding relationship between the program 800 and the intermediate representation is stored in the database. If the size of the input data of the in-place operation of the program 800 is different from the size of the output data, the information processing system may update the database by changing such that the pointer of the input data of the in-place operation points to the output data of the operation of the intermediate representation corresponding to the output data of the in-place operation.

A first state 810 represents an example of a state in which the database is updated so that an intermediate representation of the program 800 is created based on an in-place operation 802 that changes the size of data included in the program 800, and the pointer of the input data of the in-place operation points to the output data of the operation of the intermediate representation corresponding to the output data of the in-place operation. For example, as illustrated, the information processing system may create an intermediate representation by extracting the in-place operation 802 (e.g., "D = A.view(3,2)") that changes the first size (e.g., 2 X 3) of tensor A of the program 800 to a second size (e.g., 3 X 2), and update the database by changing such that the pointer of the input data of the in-place operation points to the output data (e.g., data node D(3,2)) of the operation of the intermediate representation corresponding to the output data of the in-place operation. That is, the information processing system may update the corresponding relationship stored in the database with information 812 that tensor A of the program 800 corresponds to data node D(3,2) of the intermediate representation. In addition, the information processing system may store information 814 (e.g., "A view(2,3)") on the operation to return to the first size, in association with input data (e.g., tensor A) of the in-place operation.

In FIG. 8, the illustrations of tensor B and tensor F are omitted from the database and intermediate representation for convenience of explanation. In addition, in the illustration of FIG. 8, the information that tensor C, tensor D, and tensor E correspond to data node C, data node D, and data node E of the intermediate representation, respectively, is omitted, but this is merely for convenience of explanation, and information on each tensor in the database may include information that the tensor corresponds to a specific data node of the intermediate representation.

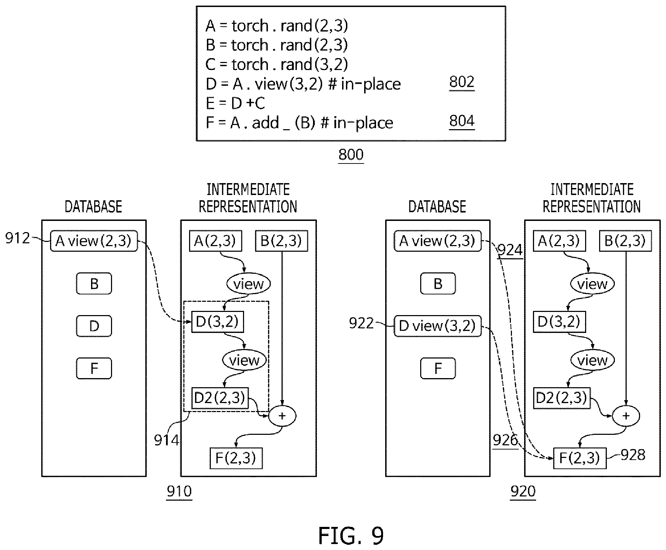

FIG. 9 is a diagram illustrating an example of a state in which an intermediate representation for the program 800 including an in-place operation that changes the size of two or more data is created and the corresponding relationship between the program 800 and the intermediate representation is stored in the database. As a subsequent operation of the in-place operation of the program 800, if there is an operation using the first size of the input data of the in-place operation, the information processing system may create the intermediate representation using an operation to return the second size of the input data of the in-place operation to the first size. In addition, if the subsequent operation of the in-place operation is a subsequent in-place operation, the information processing system may change the second size of output data of the in-place operation to the first size by pointing each pointer of the input data of the in-place operation and the output data of the in-place operation to the output data of the operation of the intermediate representation corresponding to the output data of the subsequent in-place operation.

As a specific example, an intermediate representation may be created for the program 800 including an in-place operation that changes the size of data through a first state 910 and a second state 920, and the corresponding relationship between the program 800 and the intermediate representation may be updated. As a subsequent operation of the third in-place operation 802 that changes the size of the input data, if there is a fourth in-place operation 804 using the original size of the input data, the first state 910 represents an example of a state in which the information processing system creates an intermediate representation using an inverse operation. For example, as a subsequent operation of the third in-place operation 802 (e.g., "D = A.view(3,2)") that changes the first size (e.g., 2 X 3) of tensor A of the program 800 to a second size (e.g., 3 X 2), if there is the fourth in-place operation 804 (e.g., "F = A.add_(B)") that uses the first size of tensor A (e.g., 2 X 3) as illustrated, the information processing system may create the intermediate representation using an operation 914 (e.g., "D2 = D.view(2,3)") that can return the second size of tensor A to the first size. While the illustrations of tensor C and tensor E are omitted from the database and the intermediate representation in the first state 910, this is for convenience of explanation. In addition, while it is illustrated that the information that tensor B, tensor D, and tensor F correspond to data node B, data node D, and data node F of the intermediate representation, respectively is omitted in the first state 910, this is merely for convenience of explanation, and information on each tensor in the database may include information that the tensor corresponds to a specific data node of the intermediate representation.

The second state 920 represents an example of a state in which, if the fourth in-place operation 804 is performed, the corresponding relationship between the input and output data of the third in-place operation 802 and the intermediate representation is updated by the information processing system. For example, if the fourth in-place operation 804 is performed, the information processing system may update the database by pointing each pointer of the input data (e.g., tensor A) and output data (e.g., tensor D) of the third in-place operation 802 to output data 928 (e.g., data node F(2,3)) of the operation of the intermediate representation corresponding to the output data of the fourth in-place operation 804 and changing the second size of the output data (e.g., data node D(3,2)) of the third in-place operation 802 to the first size. That is, the information processing system may update the corresponding relationship stored in the database with information 924 and 926 that tensor A and tensor D of the program 800 correspond to the data node F(2,3) of the intermediate representation. In addition, if the fourth in-place operation 804 is performed, the information processing system may store information 922 (e.g., "D view(3,2)") on the operation to return to the second size, in association with the output data (e.g., tensor D) of the third in-place operation. Through this, if there is a fifth in-place operation using the second size, the information on the operation to return to the second size may be used in the fifth in-place operation. While the illustrations of tensor C and tensor E are omitted from the database and the intermediate representation in the second state 920, this is for convenience of explanation. In addition, in the illustration of the second state 920, the information that tensor B and tensor F correspond to data node B and data node F of the intermediate representation, respectively, is omitted, but this is merely for convenience of explanation, and information on each tensor in the database may include information that the tensor corresponds to a specific data node of the intermediate representation.

The method described above may be provided as a computer program stored in a computer-readable recording medium for execution on a computer. The medium may be a type of medium that continuously stores a program executable by a computer, or temporarily stores the program for execution or download. In addition, the medium may be a variety of writing means or storage means having a single piece of hardware or a combination of several pieces of hardware, and is not limited to a medium that is directly connected to any computer system, and accordingly, may be present on a network in a distributed manner. An example of the medium includes a medium configured to store program instructions, including a magnetic medium such as a hard disk, a floppy disk, and a magnetic tape, an optical medium such as a CD-ROM and a DVD, a magnetic-optical medium such as a floptical disk, and a ROM, a RAM, a flash memory, etc. In addition, other examples of the medium may include an app store that distributes applications, a site that supplies or distributes various software, and a recording medium or a storage medium managed by a server.

The methods, operations, or techniques of the present disclosure may be implemented by various means. For example, these techniques may be implemented in hardware, firmware, software, or a combination thereof. Those skilled in the art will further appreciate that various illustrative logical blocks, modules, circuits, and algorithm steps described in connection with the disclosure herein may be implemented in electronic hardware, computer software, or combinations of both. To clearly illustrate this interchangeability of hardware and software, various illustrative components, blocks, modules, circuits, and steps have been described above generally in terms of their functionality. Whether such a function is implemented as hardware or software varies according to design requirements imposed on the particular application and the overall system. Those skilled in the art may implement the described functions in varying ways for each particular application, but such implementation should not be interpreted as causing a departure from the scope of the present disclosure.

In a hardware implementation, processing units used to perform the techniques may be implemented in one or more ASICs, DSPs, digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computer, or a combination thereof.

Accordingly, various example logic blocks, modules, and circuits described in connection with the present disclosure may be implemented or performed with general purpose processors, DSPs, ASICs, FPGAs or other programmable logic devices, discrete gate or transistor logic, discrete hardware components, or any combination of those designed to perform the functions described herein. The general purpose processor may be a microprocessor, but in the alternative, the processor may be any related processor, controller, microcontroller, or state machine. The processor may also be implemented as a combination of computing devices, for example, a DSP and microprocessor, a plurality of microprocessors, one or more microprocessors associated with a DSP core, or any other combination of the configurations.

In the implementation using firmware and/or software, the techniques may be implemented with instructions stored on a computer-readable medium, such as random access memory (RAM), read-only memory (ROM), non-volatile random access memory (NVRAM), programmable read-only memory (PROM), erasable programmable read-only memory (EPROM), electrically erasable PROM (EEPROM), flash memory, compact disc (CD), magnetic or optical data storage devices, etc. The instructions may be executable by one or more processors, and may cause the processor(s) to perform certain aspects of the functions described in the present disclosure.

Although the examples described above have been described as utilizing aspects of the currently disclosed subject matter in one or more standalone computer systems, aspects are not limited thereto, and may be implemented in conjunction with any computing environment, such as a network or distributed computing environment. Furthermore, the aspects of the subject matter in the present disclosure may be implemented in multiple processing chips or apparatus, and storage may be similarly influenced across a plurality of apparatus. Such apparatus may include PCs, network servers, and portable apparatus.

Although the present disclosure has been described in connection with some examples herein, various modifications and changes can be made without departing from the scope of the present disclosure, which can be understood by those skilled in the art to which the present disclosure pertains. In addition, such modifications and changes should be considered within the scope of the claims appended herein.

## Claims

1. A method for creating an intermediate representation from a program including an in-place operation, the method being performed by one or more processors and comprising:
extracting, from the program, information on data for input and output and information on operation;
determining the presence or absence of an in-place operation based on the extracted information on data and the extracted information on operation; and
if there is the in-place operation, creating an intermediate representation using the extracted information on data, the extracted information on operation, and a creation rule associated with the in-place operation, wherein input data of the in-place operation is data that is replaced with output data after the in-place operation.

2. The method according to claim 1, further comprising storing, in a database, the extracted data for input and output, and a corresponding relationship between data included in the intermediate representation.

3. The method according to claim 2, wherein the creating the intermediate representation includes creating the intermediate representation by creating output data of an operation of the intermediate representation corresponding to output data of the in-place operation, and
a data name of the output data of the operation of the intermediate representation is different from a data name of the input data of the in-place operation.

4. The method according to claim 3, wherein the storing, in the database, includes updating the database by changing such that a pointer of the input data of the in-place operation points to the output data of the operation of the intermediate representation corresponding to the output data of the in-place operation.

5. The method according to claim 2, wherein
the in-place operation includes a first in-place operation and a second in-place operation following the first in-place operation,
the creating the intermediate representation includes creating the intermediate representation by creating the output data of the operation of the intermediate representation corresponding to the output data of the first in-place operation and the output data of the second in-place operation, and
a data name of the input data of the first in-place operation, a data name of the output data of the first in-place operation, and a data name of the output data of the second in-place operation are different from one another.

6. The method according to claim 5, wherein the storing, in the database, includes updating the database by changing such that a pointer of the input data of the first in-place operation points to the output data of the operation of the intermediate representation corresponding to the output data of the second in-place operation.

7. The method according to claim 2, wherein the storing, in the database, includes:
if a first size of the input data of the in-place operation is different from a second size of the output data of the in-place operation, updating the database by changing such that a pointer of the input data of the in-place operation points to the output data of the operation of the intermediate representation corresponding to the output data of the in-place operation; and
storing information on an operation to return to the first size, in association with the input data of the in-place operation.

8. The method according to claim 7, the creating the intermediate representation includes, as a subsequent operation of the in-place operation, if there is an operation using the first size of the input data of the in-place operation, creating the intermediate representation using the operation to return the second size of the input data of the in-place operation to the first size.

9. The method according to claim 8, wherein the storing, in the database, includes:
if the subsequent operation of the in-place operation is a subsequent in-place operation, changing the second size of the output data of the in-place operation to the first size by pointing each pointer of the input data of the in-place operation and the output data of the in-place operation to the output data of the operation of the intermediate representation corresponding to the output data of the subsequent in-place operation; and
storing information to return to the second size, in association with the output data of the in-place operation.

10. A non-transitory computer-readable recording medium storing instructions that, when executed by one or more processors, cause performance of the method according to claim 1.

11. An information processing system, comprising:
a memory; and
one or more processors connected to the memory and configured to execute one or more computer-readable programs included in the memory, wherein the one or more programs include instructions for:
extracting, from the program, information on data for input and output and information on operation;
determining the presence or absence of an in-place operation based on the extracted information on data and the extracted information on operation; and
if there is the in-place operation, creating an intermediate representation using the extracted information on data, the extracted information on operation, and a creation rule associated with the in-place operation, and
input data of the in-place operation is data that is replaced with output data after the in-place operation.
